# EUROPEAN PATENT APPLICATION

(11) **EP 2 393 141 A2**
(43) Date of publication of application: **07.12.2011**
(21) Application number: 10736042.2
(22) Date of filing: 29.01.2010
(51) Int. Cl.: H01M 2/10, H01M 2/02, H01M 2/20

(54) **CELL CARTRIDGE WITH A COMPOSITE INTERCELL CONNECTING NET STRUCTURE**

(30) Priority: 29.01.2009 KR 20090007161
(71) Applicant: Icel Systems Korea Inc., Geumcheon-gu, Seoul 153-786 (KR); Kang, Jeong Wook, Yangcheon-gu, Seoul 158-070 (KR)
(72) Inventor: KANG, Jeong Wook, Seoul 158-070 (KR)
(74) Representative: Charrier, Rapp & Liebau
(86) International application number: PCT/KR2010/000564
(87) International publication number: WO 2010/087651

(57) **Abstract**

The present invention provides a cell cartridge with a composite cell interconnection network, in which plural unit cells are assembled and modularized in a case in a composite series-parallel connection manner. An object of the present invention is to provide a cell cartridge with a composite cell interconnection network, in which a plurality of unit cells can be simply assembled, as opposed to conventional methods of binding the unit cells with glass tape, for example, to shorten the time required for assembly, improve assemblability and productivity, and increase the accuracy of manufacturing standards. Moreover, another object of the present invention is to provide a cell cartridge with a composite cell interconnection network, in which a plurality of unit cells are spaced at regular intervals to prevent problems caused by direct contact between the cells and by heat generated thereby, prevent problems such as cell performance degradation and reduced battery lifespan caused by the direct contact and the generated heat, and enable mass production of standardized and modularized battery packs. Furthermore, still another object of the present invention is to provide a cell cartridge with a composite cell interconnection network, in which the structure of external terminals connected to cell terminals is modified to prevent a contact failure or excessive contact resistance between the cell terminals and the external terminals, and which can solve many other problems, caused by the welding of a nickel plate in conventional methods, such as welding defects, inconvenience of welding process, excessive assembly time due to the welding, degradation of assemblability and productivity, etc. To this end, a cell cartridge with a composite cell interconnection network is disclosed, the cell cartridge comprising: a plurality of unit cells; a case which accommodates the unit cells and is then assembled; a plurality of spacing members, each disposed between the unit cells accommodated in the case to space the unit cells a predetermined distance from each other; and a plurality of connection plates fixedly mounted on an inner side of the case and each including terminals connected to electrodes of the respective unit cells to connect the electrodes of adjacently arranged cells to each other, wherein the unit cells are connected to each other by the connection plates connected to the respective electrodes in a composite series-parallel connection manner.

## Description

### [Technical Field]

The present invention relates to a cell cartridge and, more particularly, to a cell cartridge in which a plurality of unit cells are assembled and modularized in a case.

### [Background Art]

A conventional lithium ion cell pack as an example of a storage battery, a kind of secondary battery, for storing electrical energy and supplying the electrical energy to a load will be briefly described below. First, a plurality of lithium ion cells capable of charging and discharging are combined into a unit module, a plurality of unit modules are combined into a larger module, and a plurality of larger modules are combined into a much larger module, thus manufacturing a battery pack having a desired capacity.

In this case, cells having a circular cross-section (i.e., cylindrical cells) or cells having a square cross-section are bound to each other with glass tape, for example, to form a unit module and a plurality of unit modules are combined appropriately with glass tape, thus manufacturing a battery pack.

For example, when manufacturing a battery pack including seven rows of cells connected in series and fourteen rows of cells connected in parallel, a process of binding seven cells with glass tape is performed fourteen times to form a total of fourteen unit modules, each two unit modules are bound to each other with glass tape to form a total of seven larger modules, each two larger modules are bound to each other with glass tape to form a total of three much larger modules, and these three modules are bound to the remaining one module, thus manufacturing a battery pack including a total of 98 cells.

However, such a manufacturing process requires a lot of time and may produce a number of defects. Moreover, the manual process may lead to inaccuracies in the manufacturing standards for the battery packs.

Especially, since the cells are in direct contact with each other, there is no sufficient shock absorption between the cells, and the heat generated is transferred to each other during discharge to cause interaction between the cells, which results in a significant reduction in operating efficiency, thereby reducing the lifespan of the battery.

Moreover, in the case where the cells are simply bound to each other with glass tape, a contact failure or excessive contact resistance between cell terminals and external terminals may occur due to position errors between the cells bonded to each other with the glass tape.

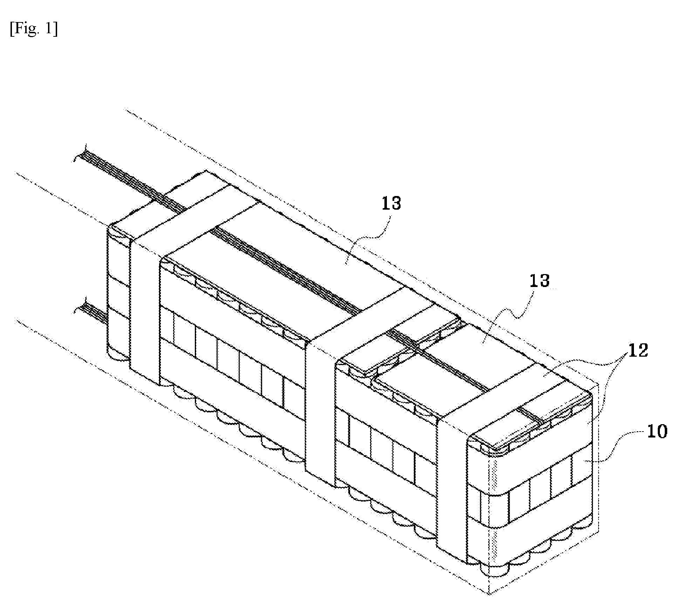

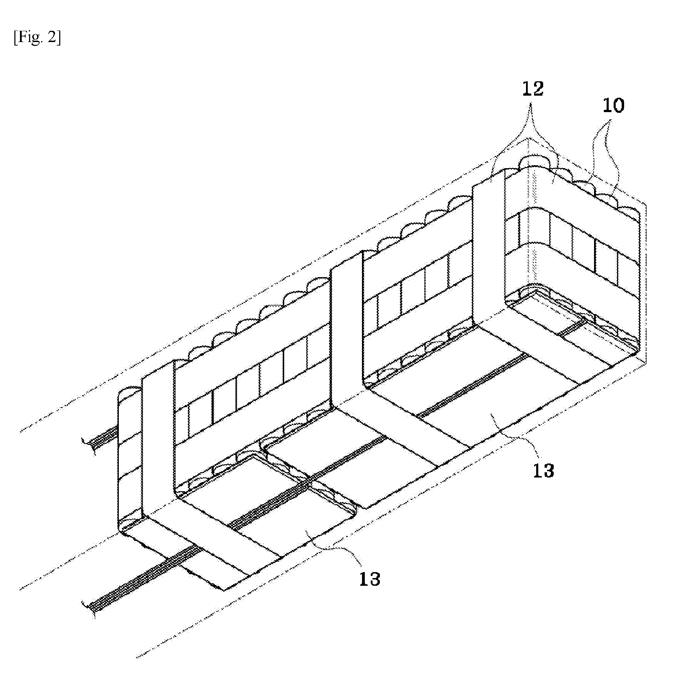

Furthermore, for the application of compounded interconnection, as shown in FIGS. 1 and 2, in the case where terminals of cells 10 and connection plates 12 (for electrically connecting the cells to each other, typically nickel plate conductors) are welded together, a number of welding defects with the connection plates 12 may occur due to position errors between the cells bonded to each other with glass tape 13. Moreover, there are many other problems such as the inconvenience of welding process, excessive assembly time due to the welding, degradation of assemblability and productivity, etc.

In addition, when a nickel plate is improperly welded or a certain cell needs to be repaired or replaced in the event of a failure, the corresponding nickel plate welded to the cells and the taping on the cells should be disassembled. As a result, the disassembled cells and nickel plate should be discarded, which increases the cost and the process of welding the nickel plate to the cells and taping the cells should be repeated.

### [Disclosure]

### [Technical Problem]

Accordingly, the present invention has been made to solve the above-described problems, and an object of the present invention is to provide a cell cartridge with a composite cell interconnection network, in which a plurality of unit cells can be simply assembled, as opposed to conventional methods of binding the unit cells with glass tape, for example, to shorten the time required for assembly, improve assemblability and productivity, and increase the accuracy of manufacturing standards.

Moreover, another object of the present invention is to provide a cell cartridge with a composite cell interconnection network, in which a plurality of unit cells are spaced at regular intervals to prevent problems caused by the direct contact between the cells and by the heat generated thereby, prevent problems such as cell performance degradation and reduced battery lifespan caused by the direct contact and the generated heat, and enable mass production of standardized and modularized battery packs.

Furthermore, still another object of the present invention is to provide a cell cartridge with a composite cell interconnection network, in which the structure of external terminals connected to cell terminals is modified to prevent a contact failure or excessive contact resistance between the cell terminals and the external terminals, and which can solve many other problems, caused by the welding of a nickel plate in conventional methods, such as welding defects, inconvenience of welding process, excessive assembly time due to the welding, degradation of assemblability and productivity, etc.

### [Technical Solution]

To accomplish the above objects of the present invention, there is provided a cell cartridge with a composite cell interconnection network, the cell cartridge comprising: a plurality of unit cells; a case which accommodates the unit cells and is then assembled; a plurality of spacing members, each disposed between the unit cells accommodated in the case to space the unit cells a predetermined distance from each other; and a plurality of connection plates fixedly mounted on an inner side of the case and each including terminals connected to electrodes of the respective unit cells to connect the electrodes of adjacently arranged cells to each other, wherein the unit cells are connected to each other by the connection plates connected to the respective electrodes in a composite series-parallel connection manner.

In a preferred embodiment, the case may comprise: a case body having an interior space in which the unit cells are accommodated; an upper cover assembled to the case body to cover an upper side of the case body; and a side portion assembled to one side of the case body to support the sides of the unit cells accommodated in the case body, wherein the connection plates connecting the electrodes of the respective unit cells to each other may be fixedly mounted on an inner side of a bottom plate of the case body and on an inner side of the upper cover.

The case may further comprise an outer side cover, assembled to the outermost side of the side portion, and a receiving space, in which circuit components and electrical components such as a PCB and the like are accommodated, the receiving space being formed between the side portion and the outer side cover.

Each of the connection plates may comprise a lead integrally formed on one end thereof and projecting to the outside of the side portion assembled to the case body such that the lead of connection plate is directly connected to a terminal of a PCB when the PCB is assembled to the outside of the side portion.

The lead of each connection plate may be bent at a right angle toward the outside of the side portion such that the terminal of the PCB is directly connected to a wall of the lead bent at a right angle.

The connection plate mounted on the bottom plate and the connection plate mounted on the upper cover may be formed lengthwise and arranged in the case in the transverse direction, each of the connection plates may comprise terminals connected to two rows of cells in the longitudinal direction, and the connection plates on the bottom plate and the connection plates on the upper cover may be alternately arranged in the longitudinal direction.

The side portion, which forms the side of the case, and side portions of the case body may comprise concave receiving portions, which accommodate a part of the sides of the unit cells and are formed on the inner sides of the side portions of the case, respectively, such that the unit cells accommodated and supported by the receiving portions are spaced apart from each other by the side portions.

The side portion, which forms the side of the case, the side portions of the case body, the bottom plate of the case body, and the upper cover may comprise a plurality of vent holes, respectively.

The spacing members may be formed into a long plate shape, spaced at regular intervals in the case body to be positioned between the cells, and each may comprise a plurality of concave receiving portions, in which a part of the sides of the cells is inserted through the top and bottom of both sides of the spacing members, such that the unit cells accommodated in the receiving portions are spaced apart from each other by the spacing members.

Each of the spacing members may comprise a plurality of vent holes for air circulation.

Each of the connection plates may comprise an elastic terminal plate with a Z-shaped plate spring such that the bottom of the elastic terminal plate is fixed to the connection plate and the top of the elastic terminal plate is elastically connected to the electrode of the cell.

The connection plate may comprise a plurality of terminals projecting to connect to the electrodes of the cells, each of the terminals including a magnet inserted in the middle of the terminal such that the terminal is attached to the electrode of the cell.

The connection plate may comprise a plurality of terminals projecting to connect to the electrodes of the cells, the surface of each of the terminals to be in contact the electrode of the cell has a round embossed pattern.

The connection plate may comprise a plurality of terminals projecting to connect to the electrodes of the cells, the surface of each of the terminals to be in contact the electrode of the cell has a comb-shaped pattern.

The connection plate may comprise a plurality of terminals projecting to connect to the electrodes of the cells, each of the terminals comprising a spring disposed in an interior space thereof and a terminal plate mounted at the top end of the terminal, where the terminal plate is to be in contact with the electrode of the cell, elastically supported by the spring, and electrically connected to the terminal of the connection plate, such that the terminal plate elastically projects by the spring and thus the projecting middle of the terminal plate is connected to the electrode of the cell.

The unit cells may be accommodated in upper and lower layers of a double-layered structure in the case, and an intermediate connection plate is interposed between the cells in the upper layer and the cells in the lower layer, the intermediate connection plate comprising a plurality of upper and lower terminals projecting from both upper and lower sides thereof and connected to the electrodes of the cells.

A plurality of cell cartridges may be electrically connected to each other by cables to constitute a system.

### [Advantageous Effects]

Therefore, the cell cartridge of the present invention provides the following effects.
1. Since the unit cells can be simply assembled in the cell cartridge, as opposed to the conventional methods of binding the unit cells with glass tape, for example, it is possible to shorten the time required for assembly and improve the assemblability and productivity. Moreover, since the cells are accommodated and assembled in a predetermined frame of the case, it is possible to increase the accuracy of manufacturing standards, compared to the process of simply binding the cells.
2. With the use of the spacing members, the cells can be spaced at regular intervals, and thus the cells are not in contact with each other. Therefore, it is possible to prevent the problems caused by the direct contact between the cells and by the heat generated thereby. That is, it is possible to solve the problems such as the interaction between the cells due to the heat transfer, the reduction in operating efficiency, and the reduction in lifespan of the battery.
3. With the modification of the structure of the external terminals connected to the cell terminals, it is possible to prevent a contact failure or excessive contact resistance between the cell terminals and the external terminals.
4. Since the connection of the cell terminals is not made by welding, it is possible to solve the problems, such as welding defects, inconvenience of welding process, excessive assembly time due to the welding, degradation of assemblability and productivity, etc. Especially, the cells can be simply accommodated in the case to which the connection plates are preassembled, and the electrodes at both ends of the respective cells accommodated in the case can be securely connected to the terminals of the connection plates without welding. Therefore, it is possible to eliminate the process of welding the nickel plates used as the connection plates to the electrodes at both ends of the respective cells, thereby enabling mass production, compared to the use of the welded nickel plates. Moreover, according to the conventional cell cartridge in which the nickel plates are welded to the cells, when any nickel plate is improperly welded or a certain cell needs to be repaired or replaced in the event of a failure, the corresponding nickel plate welded to the cells and the taping on the cells should be disassembled (that is, the disassembled cells and nickel plate should be discarded, which increases the cost, and the process of welding the nickel plate to the cells and taping the cells should be repeated). However, according to the cell cartridge of the present invention, only the defective cell can be easily replaced, and thus the time and cost for the repair and recovery can be reduced. That is, since the defective cell can be simply removed from the case and a new cell can be replaced, the replacement is easy to do.
5. According to the cell cartridge of the present invention, in which the connection plates are alternately arranged such that the cells in different rows are connected in series while the cells in the same row are connected in parallel, it is possible to construct a composite series-parallel connection network (with a compounded interconnection) only by accommodating the cells in the case.

### [Description of Drawings]

FIGS. 1 and 2 are perspective views of a conventional battery pack, in which FIG. 1 is a top perspective view and FIG. 2 is a bottom perspective view.
FIG. 3 is an exploded perspective view of a cell cartridge in accordance with a preferred embodiment of the present invention.
FIG. 4 is an exploded perspective view of an upper cover of a cell cartridge in accordance with the present invention.
FIG. 5 is an assembled perspective view of an upper cover of a cell cartridge in accordance with the present invention.
FIGS. 6 to 10 are exploded perspective views of a cell cartridge in accordance with of the present invention.
FIG. 11 is a perspective view of a cell cartridge in accordance with the present invention before an upper cover is assembled.
FIG. 12 is an assembled perspective view of a cell cartridge in accordance with the present invention.
FIGS. 13A and 13B are perspective views showing the arrangement of connection plates and the connection of cells for composite series-parallel connection in a cell cartridge in accordance with the present invention.
FIG. 14 is a cross-sectional view showing the connection between connection plate terminals and cell terminals when cells are accommodated in a cell cartridge in accordance with the present invention.
FIG. 15 is a cross-sectional view showing a double-layered structure in which cells are accommodated in a cell cartridge in accordance with another preferred embodiment of the present invention.
FIGS. 16 to 19 are cross-sectional views showing various embodiments of connection plate terminals in a cell cartridge in accordance with the present invention.
FIGS. 20A and 20B are circuit diagrams showing the composite series-parallel connection of cells in a cell cartridge in accordance with the present invention.

Reference numerals set forth in the Drawings includes reference to the following elements as further discussed below:

| | |
|---|---|
| 10: cell | 11: (cell) terminal |
| 100: case | 101: connection plate |
| 102a, 102b, 102: (connection plate) terminals | |
| 103: magnet | 104: spring |
| 105: terminal plate | |
| 106: intermediate connection plate | |
| 107: (intermediate connection plate) terminal | |
| 110: case body | 111: side portion |
| 112: receiving portion | 120: upper cover |
| 130: side portion | 131: receiving portion |
| 140: outside cover | 150: spacing member |
| 151: receiving portion | 160: PCB |

### [Mode for Invention]

Features and advantages of the present invention will be made clear from the following detailed description based on the accompanying drawings. Terms or words used in the specification and claims herein should be construed as the meanings and concepts matching the technical idea of the present invention based on the principle that an inventor is able to appropriately define the concepts of the terms to describe the inventor's invention in the best way.

The present invention provides a cell cartridge with a composite cell interconnection network, in which plural unit cells are assembled and modularized in a case in a composite series-parallel connection manner.

In the cell cartridge of the present invention, the cells accommodated in the case are spaced a predetermined distance by spacing members and, at the same time, the structure of case terminals (i.e., connection plate terminals which will be described later) connected to cell terminals is modified to significantly improve the connectivity between the case terminals and the cell terminals.

Next, preferred embodiments of the present invention will be described in detail with reference to the accompanying drawings.

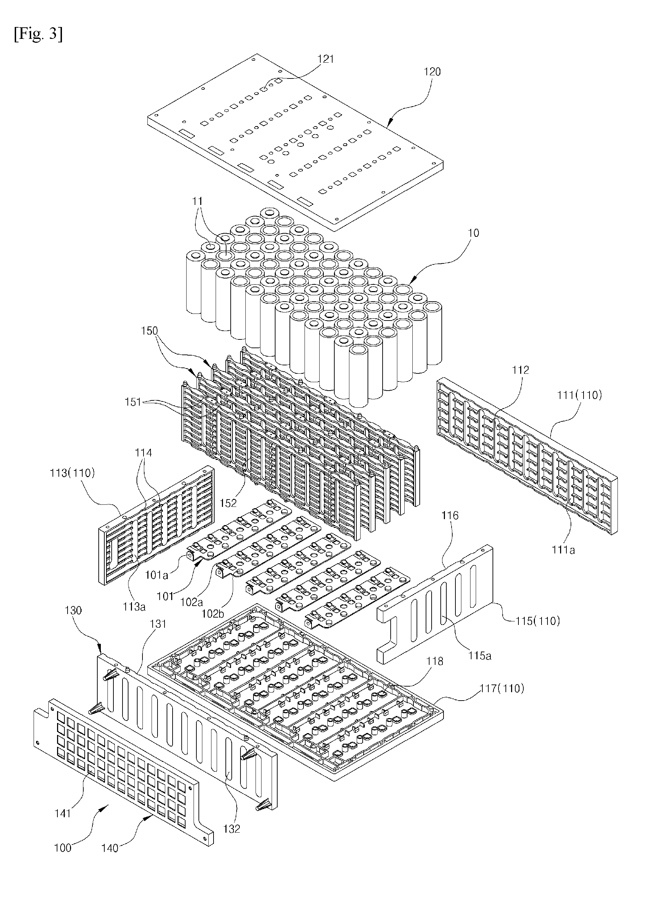

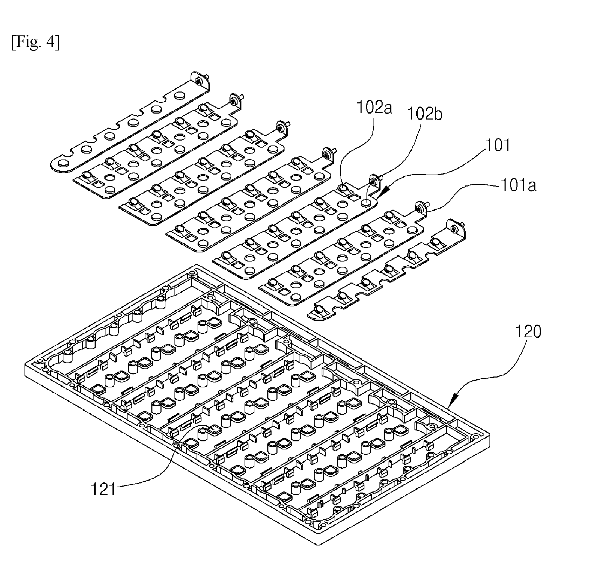

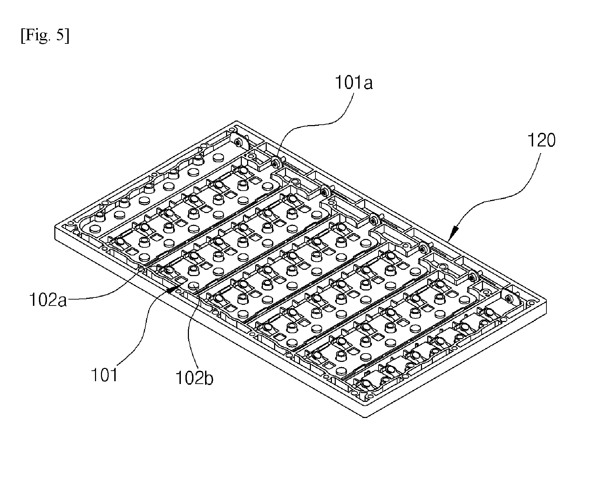

FIG. 3 is an exploded perspective view of a cell cartridge in accordance with a preferred embodiment of the present invention, FIG. 4 is an exploded perspective view of an upper cover of the cell cartridge in accordance with the present invention, and FIG. 5 is an assembled perspective view of the upper cover of the cell cartridge in accordance with the present invention.

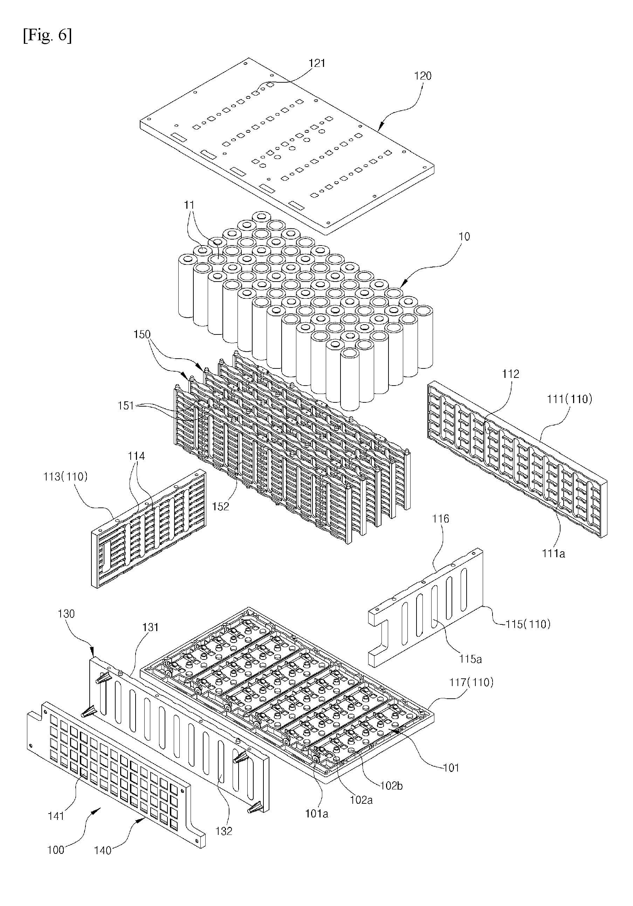

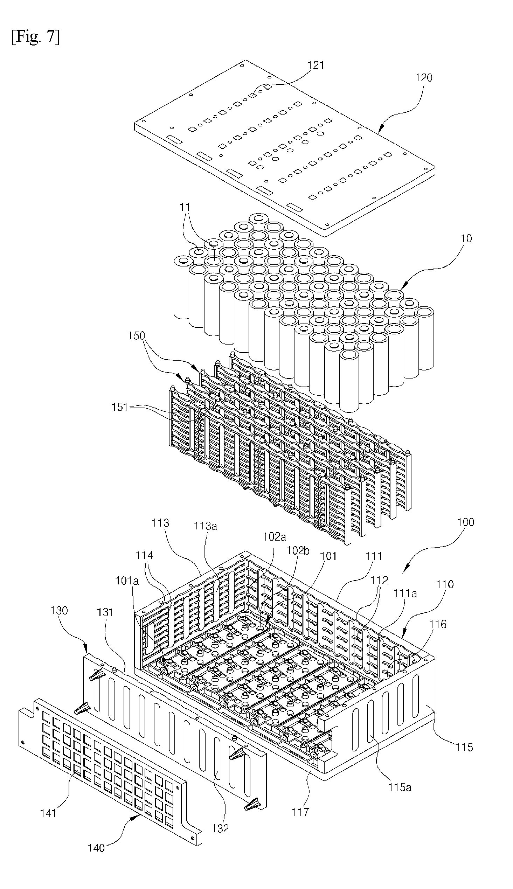

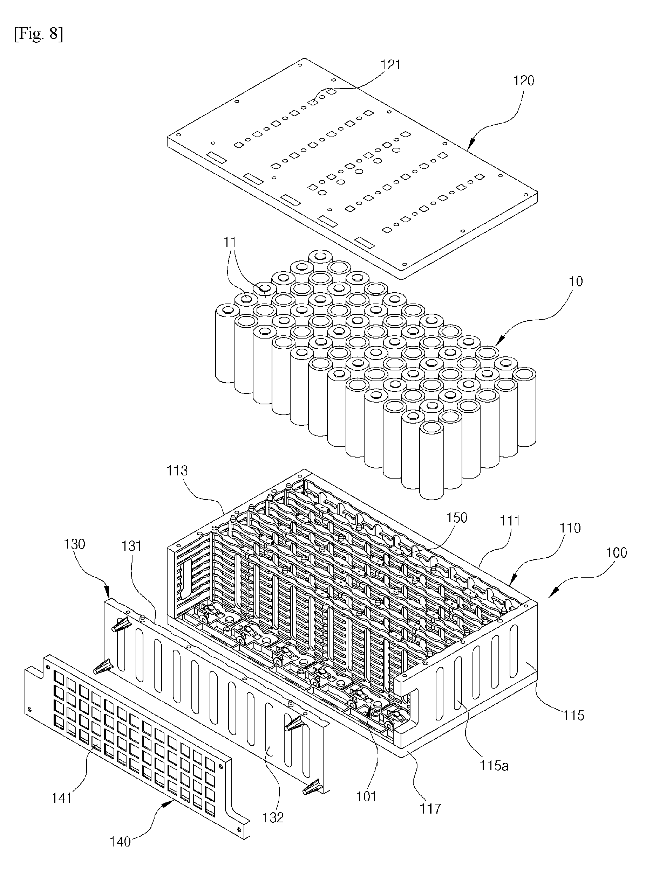

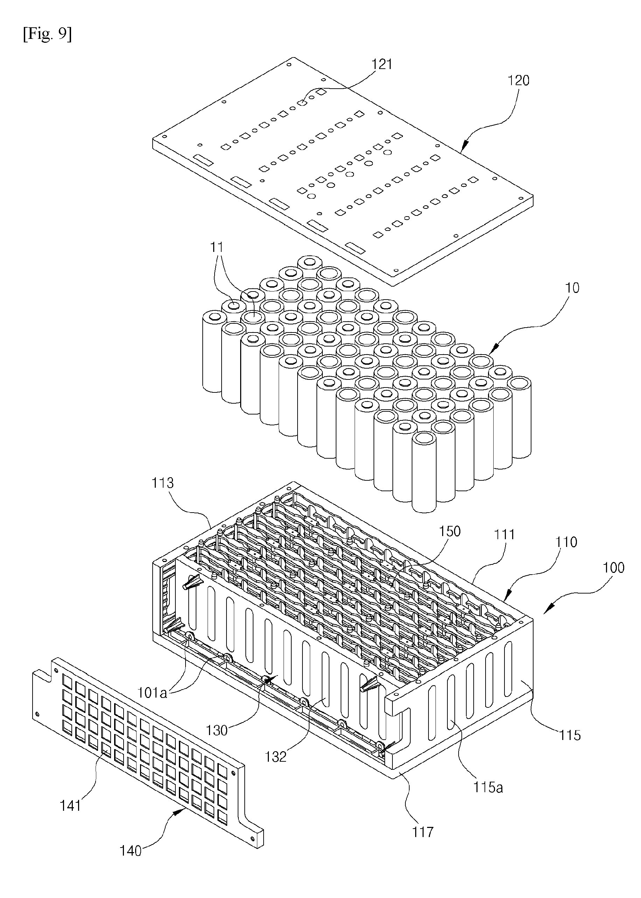

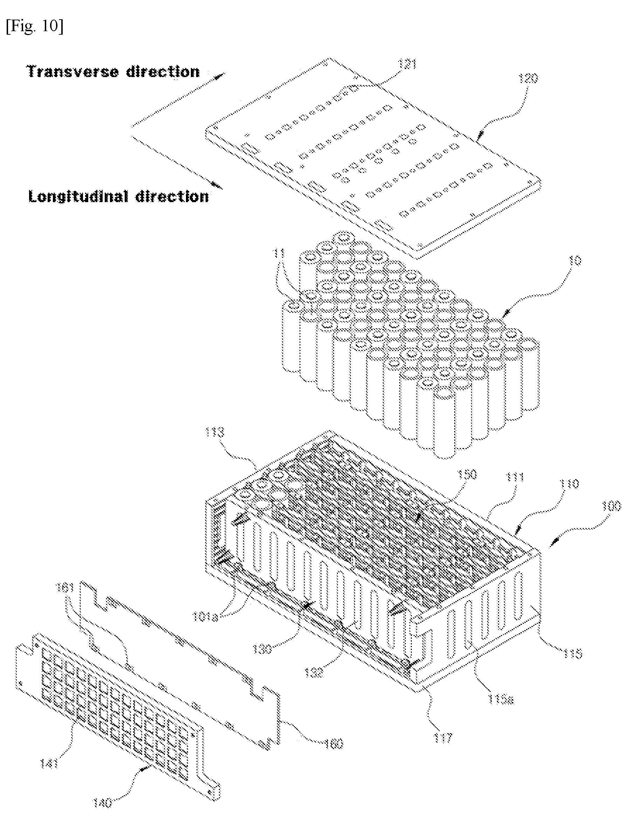

FIGS. 6 to 10 are exploded perspective views of the cell cartridge in accordance with of the present invention, in which FIG. 6 is an exploded perspective view showing that connection plates are attached and fixed to a bottom plate of a case body, FIG. 7 is an exploded perspective view showing that the case body is constructed by assembling side portions in three directions to the bottom plate, FIG. 8 is an exploded perspective view showing that spacing members are further assembled to the case body, FIG. 9 is an exploded perspective view showing that a side portion is further assembled to the case body, and FIG. 10 is an exploded perspective view showing that a part of cells are accommodated in the case body and a printed circuit board is connected to an external lead of the connection plate.

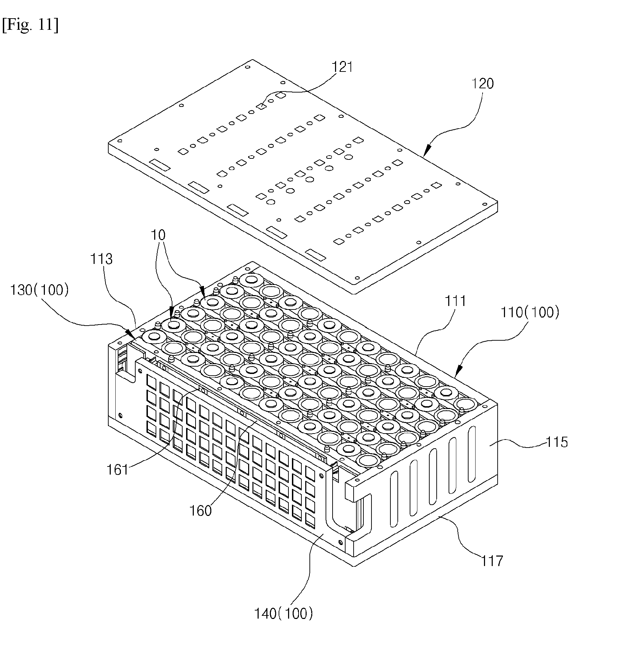

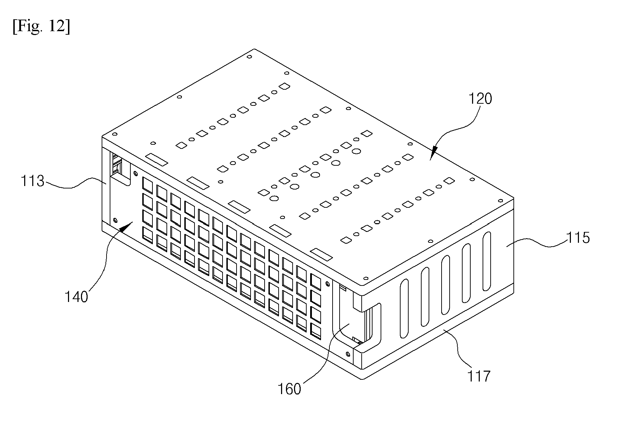

FIG. 11 is a perspective view of a cell cartridge in accordance with the present invention before the upper cover is assembled, while all cells have been accommodated in the case body and the printed circuit board and an outer side cover have been further assembled, FIG. 12 is an assembled perspective view of a cell cartridge in accordance with the present invention, in which the upper cover has been assembled.

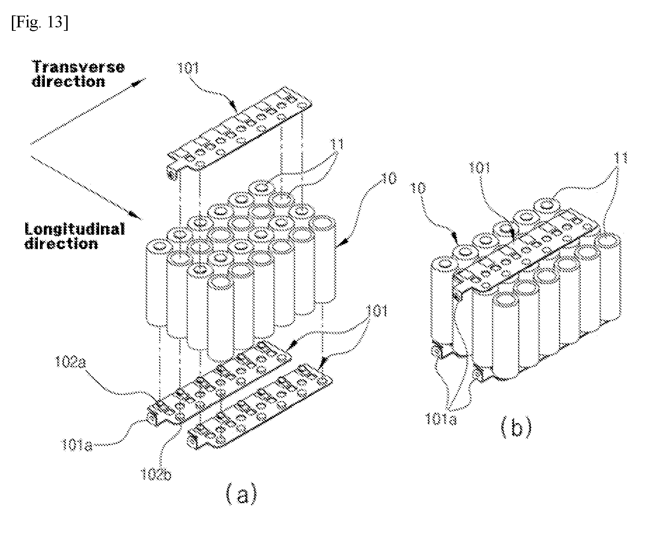

FIGS. 13A and 13B are perspective views showing the arrangement of connection plates and the connection of cells for composite series-parallel connection in a cell cartridge in accordance with the present invention, in which FIG. 13A is an exploded perspective view showing that connection plates assembled to the bottom plate of the case body and connection plates assembled to the upper cover are alternately arranged for the composite series-parallel connection manner, and FIG. 13B is a perspective view showing an example of the composite series-parallel connection by the connection plate on the bottom plate and the connection plate on the upper cover.

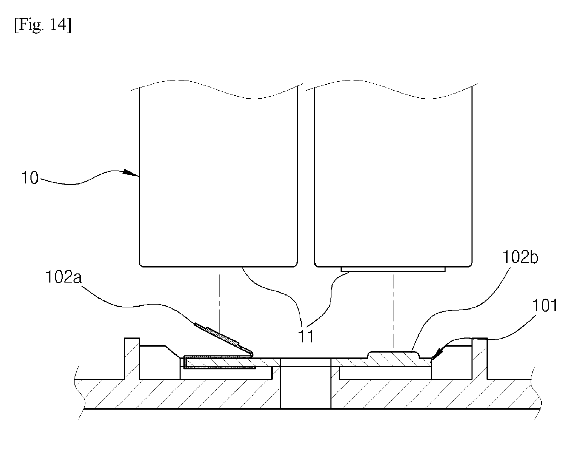

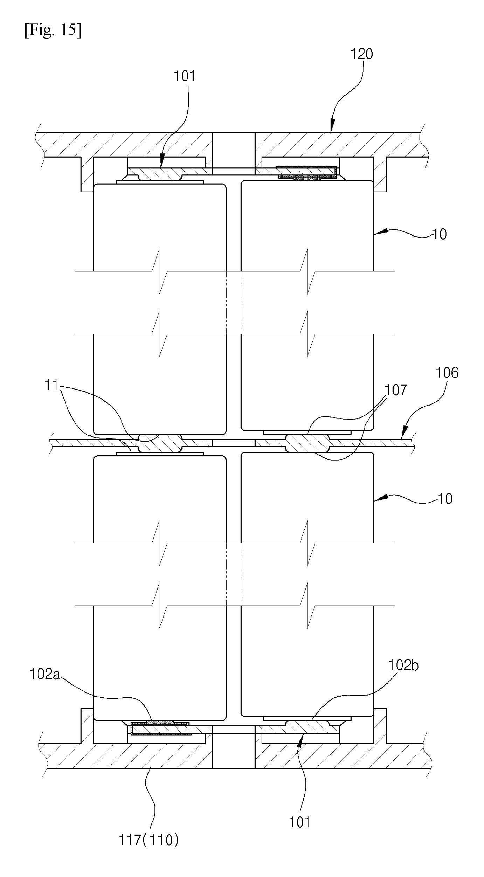

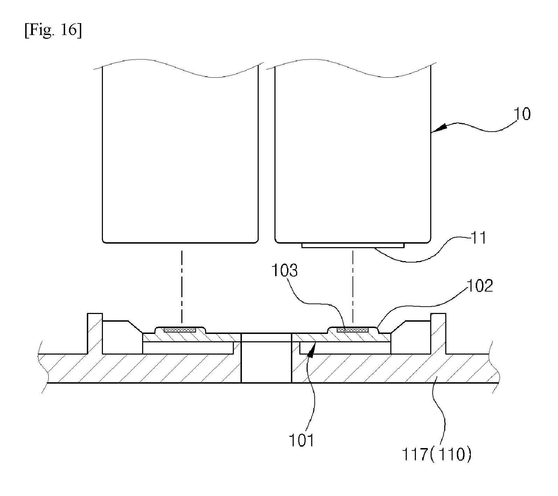

FIG. 14 is a cross-sectional view showing the connection between connection plate terminals and cell terminals when the cells are accommodated in the cell cartridge in accordance with the present invention, FIG. 15 is a cross-sectional view showing a double-layered structure in which the cells are accommodated in a cell cartridge in accordance with another preferred embodiment of the present invention, and FIGS. 16 to 19 are cross-sectional views showing various embodiments of connection plate terminals in the cell cartridge in accordance with the present invention.

As shown in the figures, the cell cartridge of the present invention generally comprises a plurality of unit cells 10 and a case 100 in which the unit cells 10 are accommodated and integrally assembled.

Here, the unit cell 10 may be a circular cross-sectional cell (i.e., cylindrical cell) or a square cross-sectional cell, and the unit cell 10 may include all types of cells capable of storing electrical energy. Preferably, the unit cell 10 may include a lithium ion (Li-ion) cell, a Li-ion polymer cell, a nickel-cadmium (Ni-Cd) cell, a nickel metal hydride (Ni-MH) cell, a lead-acid cell, etc. The unit cell 10 accommodated in the cell cartridge of the present invention may be a primary battery or a secondary battery. When the cell cartridge of the present invention is composed of a plurality of secondary batteries capable of repeatedly charging and discharging, the cell cartridge of the present invention can be advantageously used to construct a storage battery having a desired capacity.

The case 100 comprises a case body 110 (FIG. 7), an upper cover 120, a side portion 130, and an outer side cover 140. The case body 110 has an interior space with a rectangular parallelepiped shape, as shown in the figures, in which plural unit cells 10 are accommodated.

The case body 110 comprises a bottom plate 117 and side portions 111, 113 and 115 in three directions. As shown in FIGS. 3 and 7, the bottom plate 117 and the side portions 111, 113 and 115 in three directions are separately manufactured and assembled, thus constructing the case body 110. Here, the side portions 111, 113 and 115 in three directions are assembled and fixed to the bottom plate 117 by screw (bolt) fastening, projection-groove insertion, or a combination thereof. Of course, the bottom plate 117 and the side portions 111, 113 and 115 in three directions may be integrally formed to manufacture the case body 110 as a single component.

The upper cover 120 is to cover the upper side of the case body 110 and may be assembled to the upper side of the case body 110 by screw (bolt) fastening. The upper cover 120 may also be assembled to the case body 110 by various known methods such as fastening with a fastening means, insertion, clamping, etc., other than the screw fastening.

The side portion 130 is a kind of side cover assembled to one side of the case body 110 to face the side portion 111 of the case body 110 (i.e., assembled adjacent to the other two side portions 113 and 115 of the case body 110) and assembled to the case body 110 by screws (i.e., fastened to the bottom plate 117 of the case body 110 by screws). As a result, the side portions 111, 113, 115 and 130 in four direction of the case 100 support the sides of the cells 10 accommodated in the case 100.

Moreover, the outer side cover 140 is assembled to the outermost side of the side portion 130, thus forming an outer wall of the case 100.

A receiving space, in which circuit components and electrical components including PCBs are accommodated, is formed between the side portion 130 and the outer side cover 140. That is, various circuit modules, such as microprocessors, various elements, PCBc, etc., a cooling fan, and the like are mounted in the receiving space.

For example, a protection circuit module (PCM, including a protection circuit for battery overcharge, a protection circuit for various elements such as FET, etc.) a battery management system, a sensing module (e.g., a current sensing module), a display module (e.g., an LCD or LED drive module for providing various information such as battery remaining capacity, state of charge (SOC), state of discharge (SOD), available time, etc), an alarm module for setting a lifetime, a communication module (using SMBus communication) for generating an alarm, and an interface module may be mounted in the receiving space.

Meanwhile, concave receiving portions 112, 114, 116 and 131, in which a part of the sides of the unit cells 10 can be accommodated, are formed on the inner sides of the side portions 111, 113, 115 and 130 in four direction of the case 100, respectively, such that the unit cells 10 accommodated in the case body 110 are spaced and supported by the receiving portions 112, 114, 116 and 131.

As illustrated in the figures, in the case of the case 100 in which circular cross-sectional cells 10 are accommodated, the concave receiving portions 112, 114, 116 and 131 are formed on the inner sides of the side portions 111, 113, 115 and 130 of the case 100 to fit the diameter of the cells 10.

In a preferred embodiment, the receiving portions 112, 114, 116 and 131 may be formed at regular intervals on the inner sides of the corresponding side portions 111, 113, 115 and 130 such that the cells 10 are spaced at regular intervals with respect to their sides. As a result, in the case of the cells 10 arranged along the outer walls of the case 100, the sides of the cells are closely supported by the inner sides of the receiving portions 112, 114, 116 and 131, and thus the positions of the cells 10 are fixed at regular intervals in the case 100.

Separate spacing members 150 are disposed between the cells 10. Each spacing member 150 is formed into a long plate shape and has a structure in which a plurality of concave receiving portions 151 are formed at regular intervals such that a part of the sides of the cells 10 is inserted through the top and bottom of both sides of the spacing members 150. In the case where circular cross-sectional cells 10 are used, the receiving portions 151 of each spacing member 150 are formed to fit the diameter of the cells 10.

The spacing members 150 are used to keep the space between the cells 10 arranged on the outermost side and the cells 10 arranged adjacent thereto and the space between the cells 10 arranged in the inside constant. The sides of the cells 10 are closely supported on the inner sides of the receiving portions 151, and thus the positions of the cells 10 are fixed at regular intervals in the case 100.

After the spacing members 150 are assembled in the case 100, the cells 10 are inserted between the spacing members 150 and the side portions 111, 113, 115 and 130 and between the spacing members 150 and assembled thereto.

Each spacing member 150 is inserted lengthwise between the adjacent cells 10 along the rows of the cells 10 arranged and, as shown in FIG. 10, the spacing members 150 may be inserted between the cells 10 in the longitudinal direction in the case 100.

Here, as shown in the illustrated embodiment, the spacing members 150 may be spaced at regular intervals in the case body 110 to be positioned between the cells 10. Each spacing member 150 includes a plurality of vent holes 152 for air circulation.

The spacing members 150 may be integrally formed to project from the inner side of the bottom plate 117 of the case body 110 and from the inner side of the upper cover 120 or, as shown in the figures, may be separately manufactured and assembled to the bottom plate 117 of the case body 110 and the upper cover 120 by screw fastening or projection-groove insertion.

Alternatively, the spacing members 150 may be spaced apart from each other to be interposed lengthwise between the cells 10 in the case body 110 such that both ends of each spacing member 150 can be fixed to the two side portions 113 and 115 of the case body 110.

Otherwise, the spacing members 150 may be installed at a predetermined height from the bottom plate 117 to be positioned between the cells 10 and, in this case, support means, such as vertical columns, elevated platforms, etc., for supporting the spacing members 150 at a predetermined height may be provided.

That is, a plurality of vertical columns are installed at a predetermined height on the bottom plate 117 of the case body 110 such that the spacing members 150 can be supported horizontally at a predetermined height, and then the spacing members 150 are placed horizontally on the top of the vertical columns and fixedly supported by the vertical columns (the spacing members 150 can be fastened to the vertical columns by screws, for example). Here, the vertical columns function as legs for supporting the horizontally disposed spacing members 150.

Moreover, the horizontally disposed spacing members 150 may be put on elevated platforms, formed on the side portions of the case 100 at a predetermined height, and fixedly supported by the elevated platforms (the spacing members 150 can be fastened to the elevated platforms by screws, for example). In this case, both ends of each spacing member 150 are placed and supported on the elevated platforms provided at a predetermined height of the inner sides of the case 100.

As such, the spacing members 150 are positioned lengthwise between the rows of the cells 10 to keep the space between the cells 10 and may be separately assembled and fixed to the inside of the case 100 or integrally formed with the case 100.

Moreover, a plurality of vent holes 111a, 113a, 115a, 118, 121, 132 and 141 are formed at regular intervals on the respective sides of the case 100, i.e., on the side portions 111, 113, 115 and 130 in for directions, the outer side cover 140, the bottom plate 117, and the upper cover 120, respectively.

These vent holes 111a, 113a, 115a, 118, 121, 132 and 141 are to release the heat generated in the cells 10 to the outside, thereby cooling the cells 10.

Meanwhile, since the cells 10 accommodated in the case 100 must be electrically connected to each other, it is necessary to provide an external terminal connected to a terminal 11 of each cell 10.

To this end, a plurality of connection plates 101 formed of a conductor are fixedly mounted on the inner side of the bottom plate 117 of the case body 110 and on the inner side of the upper cover 120. FIGS. 4 and 5 shows that the connection plates 101 are fixed to the inner side of the upper cover 120. The connection plates 101 are formed into a plate shape and fixedly mounted on the inner side of the bottom plate 117 and on the inner side of the upper cover 120, respectively, so as to electrically connect the terminals 11 of the cells 10 accommodated in the case 100 (i.e., electrodes at both ends of the respective cells) to each other. When the connection plates 101 are fixedly mounted on the inner side of the bottom plate 117 and on the inner side of the upper cover 120, each connection plate 101 may be assembled to the bottom plate 117 and the upper cover 120 in various ways such as screw (bolt) fastening, clamping, insertion, etc.

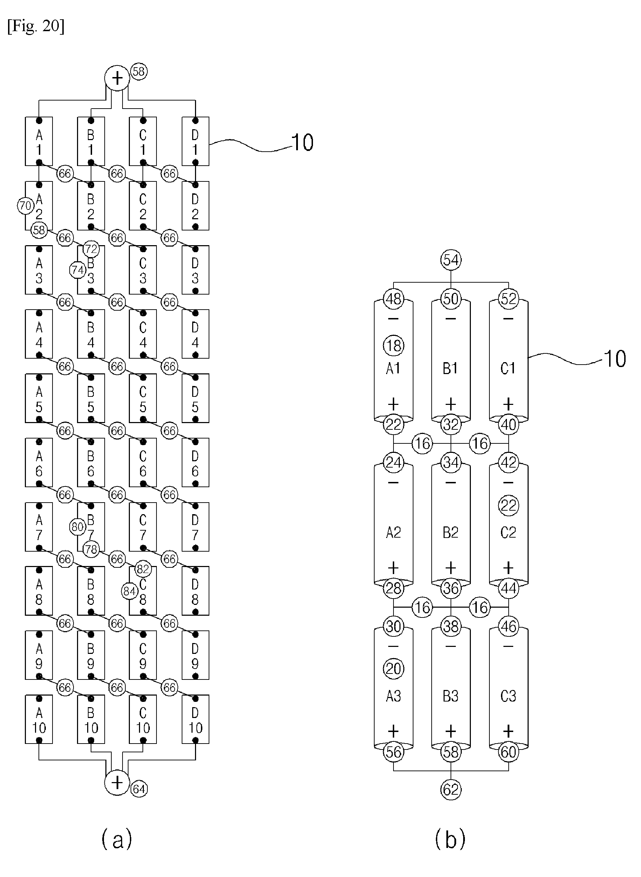

Here, the cells 10 accommodated in the case 100 are connected to each other in a composite series-parallel connection manner (i.e., a cell network with a compounded interconnection) by the connection plates 101 connected to the electrodes at both ends of the respective cells 10 as shown in FIG. 20 (forming a composite cell interconnection network).

In the cell cartridge of the present invention, the arrangement of the connection plates 101 to allow the cells 10 accommodated in the case 100 to connect to each other in the composite series-parallel connection manner will be described with reference to FIGS. 10 and 13.

As shown in FIG. 10, when the cells 10 are accommodated in the case 100, six cells 10 are arranged in a transverse direction and twelve cells 10 are arranged in a longitudinal direction. Here, the cells 10 are accommodated in the case 100 in such a manner that the polarity directions of the cells 10 adjacently arranged in the transverse direction are all the same and those of the cells 10 arranged in the longitudinal direction are opposed to each other.

Therefore, when all positive electrodes of the cells 10 in any row in the transverse direction are connected to the connection plate 101 assembled to the upper cover 120, all negative electrodes of the corresponding cells 10 are connected to the connection plate 101 assembled to the bottom plate 117. Then, all positive electrodes of the cells 10 in the next row in the transverse direction are connected to the connection plate 101 on the bottom plate 117, and all negative electrodes of the corresponding cells 10 are connected to the connection plate 101 on the upper cover 120. Likewise, all positive electrodes of the cells 10 in the subsequent row in the transverse direction are connected to the connection plate 101 on the upper cover 120, and all negative electrodes of the corresponding cells 10 are connected to the connection plate 101 on the bottom plate 117. As such, the directions of the cells 10 inserted into the case 100 alternate such that the cells 10 adjacently arranged in the longitudinal direction are opposed to each other. As a result, the polarity directions of the cells 10 arranged in the same transverse direction are all the same and those of the cells 10 adjacently arranged in the longitudinal direction are opposed to each other.

The connection plates 101 on the bottom plate 117 and the connection plates 101 on the upper cover 120 are formed lengthwise, respectively, and disposed lengthwise in the transverse direction in the case 100. Each connection plate 101 includes a plurality of terminals connected to two rows of cells 10 in the longitudinal direction. Moreover, the connection plates 101 on the bottom plate 117 and the connection plates 101 on the upper cover 120 are alternately arranged in the longitudinal direction. Six cells 10 in the transverse direction and two cells 10 in the longitudinal direction are connected to each of the connection plates 101 on the bottom plate 117 and the upper cover 120, in which the electrodes of the two cells 10 in the longitudinal direction have opposite polarities.

For example, in FIG. 13 (showing a part of cells), two connection plates 101 at the top and bottom are alternately arranged in the longitudinal direction, respectively, not in the same position, such that lower electrodes in first and second rows in the longitudinal direction are connected to the connection plate at the bottom (i.e., the connection plate of the bottom plate), upper electrodes in second and third rows are connected to the connection plate at the top (i.e., the connection plate of the upper cover), and lower electrodes in third and fourth rows are connected to the connection plate at the bottom (although not shown, upper electrode in fourth and fifth rows are connected to the connection plate at the top).

Here, the six cells 10 arranged in the transverse direction are all connected to the same connection plate 101, and thus they are connected in parallel. Moreover, the connection plates 101 at the top and bottom, i.e., the connection plates 101 on the bottom plate 117 and the connection plates 101 on the upper cover 120, are alternately arranged, and the positive electrodes and the negative electrodes of the two rows of cells 10 adjacently arranged in the longitudinal direction are all connected to the same connection plate 101, respectively. Therefore, the cells 10 adjacently arranged in the longitudinal direction are connected in series.

As a result, among the cells in the 6 x 12 array, the six cells arranged in the same row in the transverse direction are all connected in parallel, and the six cells connected in parallel in the same row are connected in series to six cells adjacently arranged in the other row in the longitudinal direction.

As such, a composite series-parallel connection network, in which six cells arranged in each row in the transverse direction are connected in parallel and twelve rows of cells arranged in the longitudinal direction are connected in parallel, is constructed.

As stated above, in order to implement the composite series-parallel connection, the connection plates 101 on the bottom plate 117 and the connection plates 101 on the upper cover 120 must not be arranged in the same manner, but should be alternately arranged such that the electrodes of the adjacent cells are alternately connected to the connection plates 101 at the top and bottom in the longitudinal direction as shown in FIG. 13.

When the connection plates 101 at the top (i.e., the connection plates mounted on the upper cover) connecting the upper electrodes of the cells 10 and the connection plates 101 at the bottom (i.e., the connection plates mounted on the bottom plate) connecting the lower electrodes of the cells 10 in the case 100 are alternately arranged as shown in FIG. 13, the cells arranged in the same row can be (electrically) connected in parallel and the cells arranged in different rows can be connected in series as shown in FIG. 20.

As a result, according to the cell cartridge of the present invention, in which the connection plates are alternately arranged such that the cells in different rows are connected in series while the cells in the same row are connected in parallel, it is possible to construct the composite series-parallel connection network (with a compounded interconnection) only by accommodating the cells in the case.

As such, according to the cell cartridge of the present invention, in which the cells 10 are connected in series and parallel, it is possible to solve the problem that the power supply of the entire cell cartridge is completely cut off even in the event of a failure in one cell and reduce the failure rate of the cell cartridge, as opposed to the cell cartridge in which the cells are all connected in series.

According to the above-described cell cartridge of the present invention, in the event of a defect, the defective cell can be easily and selectively replaced, and thus it is possible to solve the problems of inefficiency and waste caused by the conventional cell cartridge, in which nickel plates used as the connection plates are welded to the electrodes of the cells and all cells should be replaced in the event of a defect.

Especially, according to the cell cartridge of the present invention, the cells can be simply accommodated in the case to which the connection plates are preassembled, and the electrodes at both ends of the respective cells accommodated in the case can be securely connected to the terminals of the connection plates without welding. Therefore, it is possible to eliminate the process of welding the nickel plates used as the connection plates to the electrodes at both ends of the respective cells.

Moreover, according to the conventional cell cartridge in which the nickel plates are welded to the cells, when any nickel plate is improperly welded or a certain cell needs to be repaired or replaced in the event of a failure, the corresponding nickel plate welded to the cells and the taping on the cells should be disassembled (that is, the disassembled cells and nickel plate should be discarded, which increases the cost, and the process of welding the nickel plate to the cells and taping the cells should be repeated). However, according to the cell cartridge of the present invention, only the defective cell can be easily replaced, and thus the time and cost for the repair and recovery can be reduced. That is, since the defective cell can be simply removed from the case and a new cell can be replaced, the replacement is easy to do.

As stated above, when the connection plates 101 at the top (i.e., the connection plates mounted on the upper cover) connecting the upper electrodes of the cells 10 and the connection plates 101 at the bottom (i.e., the connection plates mounted on the bottom plate) connecting the lower electrodes of the cells 100 in the case 100 are alternately arranged with respect to the upper and lower electrodes, the cells arranged in the same row can be (electrically) connected in parallel and the cells arranged in different rows can be connected in series as shown in FIG. 20. As a result, according to the cell cartridge of the present invention, in which the connection plates are alternately arranged such that the cells in different rows are connected in series while the cells in the same row are connected in parallel, it is possible to construct the composite series-parallel connection network (with a compounded interconnection) only by accommodating the cells in the case.

Moreover, a lead 101a bent at a right angle is integrally formed on one end of each connection plate 101.

The lead 101a projects to the outside of the side portion 130 assembled to the case body 110 as shown in FIG. 10. The lead 101a is directly connected to a terminal 161 of a PCB 160 when the PCB 160 is assembled to the outside of the side portion 130. Here, the terminal 161 of the PCB 160 is directly connected to the wall of the lead 101a bent at a right angle.

Therefore, the connection plates 101 can be directly connected to the PCB 160 and, when the PCB 160 is simply assembled to the outside of the side portion 130 without any cable connection, the connection plats 101 and the PCB 160 can be electrically connected together in a simple manner. As a result, during assembly of the PCB 160, the convenience and efficiency of the process can be improved. Moreover, when the voltage is measured via the lead 101a, the voltage between the cells connected in series can be determined, and thus it is possible to determine whether the cells are connected properly and whether the cells are in a normal state.

Meanwhile, the present invention is characterized by the structure of connection plate terminals connected to cell terminals (i.e., positive and negative electrodes), and preferred embodiments thereof will be described below.

In the cell cartridge of the present invention, each connection plate 101 is equipped with a terminal 102a connected to the negative electrode of one cell 10, and a terminal 102b connected to the positive electrode of another cell 10. In the illustrated embodiment, two rows of terminals 102a and 102b are provided in the connection plate 101 in the longitudinal direction such that two rows of cells 10 are connected thereto.

FIG. 14 is a cross-sectional view showing a connection plate terminal structure in accordance with a first embodiment of the present invention, in which the terminal 102a connected to the negative electrode and the terminal 102b connected to positive electrode have different shape to ensure the connection of the cells 10.

First, the terminal connected to the negative electrode of the cell 10 comprises an elastic terminal plate 102a. As shown in FIG. 14, the elastic terminal plate 102a with a Z-shaped plate spring is fixedly inserted into to the connection plate 101 such that the top of the elastic terminal plate 102a is elastically connected to the negative electrode of the cell 10. The elastic terminal plate 102a is formed of an elastic conductive metal plate.

Preferably, the bottom of the elastic terminal plate 102a is fixed to the rear of the connection plate 101 by spot welding, for example, such that the elastic terminal plate 102a can be fixedly secured to the connection plate 101. As a result, when the cells 10 are accommodated in the case 100, the negative electrode of each cell 10 is in close contact with the top of the elastic terminal plate 102a, and thus a more secure connection between the cell 10 and the connection plate 101 is achieved by the elastic terminal plate 102a.

On the contrary, the terminal 102b connected to the positive electrode may simply project from the connection plate 101.

As such, when the terminals of the connection plate connected to the positive and negative electrodes are formed into different shapes, the cells can be securely connected to the connection terminal and, at the same time, the insertion direction of the cells can be easily identified.

Of course, although the elastic terminal plate 102a is formed only on the connection plate terminal connected to the negative electrode of the cell 10 in the illustrated embodiment, the elastic terminal plates 102a may be formed on all the connection plate terminals connected to the positive and negative electrodes of the respective cells 10.

Since the connection plate having the above-described structure has a large contact area with the cells, compared to the conventional welding-type connection plate, the resistance (R) is low, which means less heat is generated, and thus it is possible to reduce energy loss caused by the heat.

Moreover, the cell cartridge of the preset invention may have a double-layered structure in which the cells are accommodated in upper and lower layers in the case so as to increase the entire capacity of the battery. In this case, the cells in the upper layer must be electrically connected to the cells in the lower layer and thus, as shown in FIG. 15, an intermediate connection plate 106 may be interposed between the cells 10 in the upper layer and the cells 10 in the lower layer. Here, the intermediate connection plate 106 comprises a plurality of terminals 107 connected to the terminals of the cells 10 at the top and bottom (i.e., the positive electrode of the upper cell and the negative electrode of the lower cell) and projecting upward and downward from both sides of the intermediate connection plate 106.

FIG. 16 is a cross-sectional view showing a connection plate terminal structure in accordance with a second embodiment of the present invention, in which each of the connection plates 101 fixedly mounted on the case body and the upper cover, respectively, comprises a plurality of terminals 102 formed of a conductive material and projecting to connect to cell terminals 11 (i.e., electrode). Here, a magnet 103 is inserted in the middle of each of the terminals 102 of the connection plate 101.

As a result, the cell terminal 11 is attached to the magnet 103 such that the connection plate terminal 102 can be firmly connected to the cell terminal 11. That is, since both the terminals 11 and 102 are attached to each other by the magnetic force of the magnet 103, the contact state between the case terminals 102 (i.e., connection plate terminals) and the terminals 11 of the cells 10 accommodated in the case can be securely maintained, even when an external vibration is applied thereto.

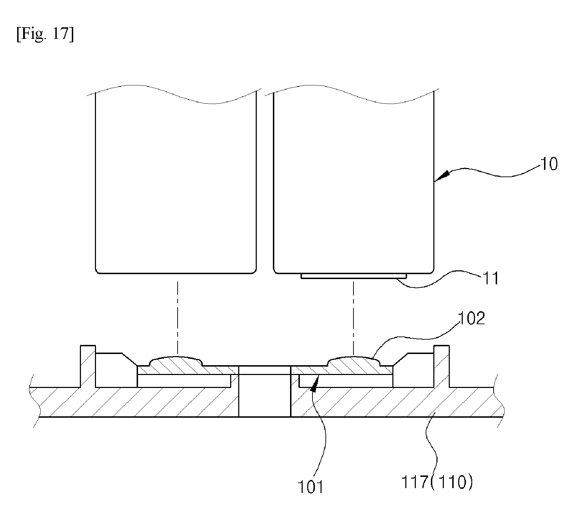

FIG. 17 is a cross-sectional view showing a connection plate terminal structure in accordance with a third embodiment of the present invention, in which the surface of the connection plate terminal 102 to be in contact with the cell terminal 11 has a round embossed pattern such that the connection plate terminal 102 can be in uniform contact with the cell terminal 11.

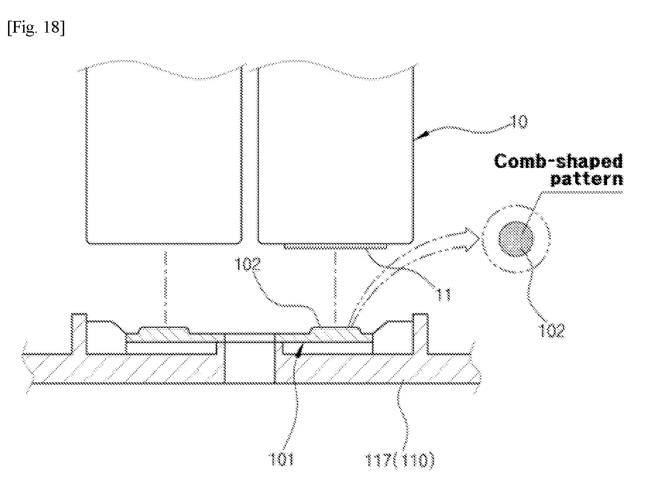

FIG. 18 is a cross-sectional view showing a connection plate terminal structure in accordance with a fourth embodiment of the present invention, in which the surface of the connection plate terminal 102 to be in contact with the cell terminal 11 has a comb-shaped pattern to increase the contact force such that both the terminals 102 and 11 are prevented from sliding over each other.

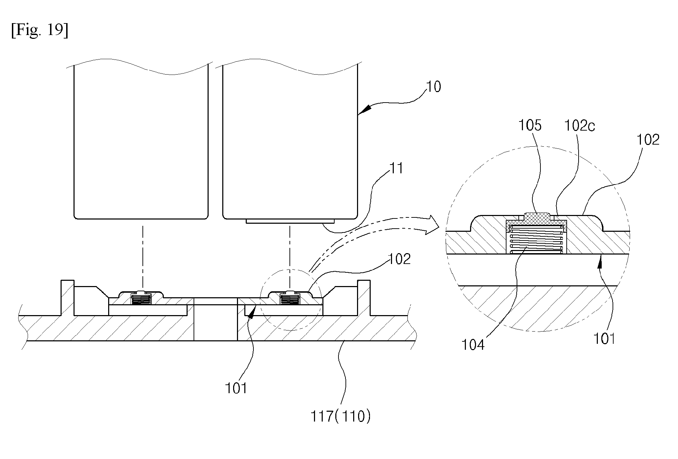

FIG. 19 is a cross-sectional view showing a connection plate terminal structure in accordance with a fifth embodiment of the present invention, in which the connection plate terminal 102 has an interior space formed in the middle thereof, and a spring 104 is disposed in the internal space.

Moreover, a terminal plate 105 elastically supported by the spring 104 is mounted at the top end of the connection plate terminal 102 in the internal space such that the terminal plate 105 is to be in contact with the cell terminal 11.

The terminal plate 105 projects from the middle of the connection plate terminal 102, and its lower edge is caught by a stopper 102c at the top end of the terminal 102 such that the terminal plate 105 elastically supported by the spring 104 does not escape to the outside.

That is, the terminal plate 105 is elastically supported by the spring 104 at the top end of the terminal 102 and elastically projects from the middle of the terminal 102. Therefore, when the cell terminal 11 is in connect with the projecting middle of the terminal 102 and presses the terminal plate 105, the terminal plate 105 is inserted into the internal space while compressing the spring 104.

Moreover, the terminal plate 105 is brought into close contact with the cell terminal 11 by the force of the spring 104 to maintain the contact state, thus increasing the contact force. Of course, for the electrical connection between the cell terminal 11 and the connection plate terminal 102, the terminal plate 105 is configured to maintain the contact state with the connection plate terminal 102 through the side edge at all times.

As such, while various connection plate terminal structures applicable to the present invention have been described, any one or a combination of the above-described five embodiments may be selectively used in an appropriate manner.

In another preferred embodiment, to implement a high capacity cell cartridge, the number of cells must be increased, and thus the size of the case should be increased. In this case, the case body 110 can be manufactured as a single component by increasing its size, and the upper cover 120 can be provided with a plurality of individual upper covers 120.

That is, in the case of the upper cover 120 covering the upper side of the case body 110, a plurality of upper covers 120 can be used to cover the entire upper side of the case body 110. In this case, each of the upper covers 120 equipped with the connection plates and covering the upper side of the case body 110 can be assembled to the case body 110 by screw fastening, for example.

As such, the cell cartridge of the present invention has been described, and a plurality of cell cartridges may constitute a system to obtain a required capacity. In this case, the plurality of cell cartridges may be electrically connected to each other by cable connection.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A cell cartridge with a composite cell interconnection network, the cell cartridge comprising:
a plurality of unit cells 10;
a case 100 which accommodates the unit cells 10 and is then assembled;
a plurality of spacing members 150, each disposed between the unit cells 10 accommodated in the case 100 to space the unit cells 10 a predetermined distance from each other; and
a plurality of connection plates 101 fixedly mounted on an inner side of the case 100 and each including terminals 102a and 102b connected to electrodes 11 of the respective unit cells 10 to connect the electrodes 11 of adjacently arranged cells 10 to each other,
wherein the unit cells 10 are connected to each other by the connection plates 101 connected to the respective electrodes 11 in a composite series-parallel connection manner.

2. The cell cartridge of claim 1, wherein the unit cell 10 is selected from the group consisting of a lithium ion (Li-ion) cell, a Li-ion polymer cell, a nickel-cadmium (Ni-Cd) cell, a nickel metal hydride (Ni-MH) cell, and a lead-acid cell.

3. The cell cartridge of claim 1, wherein the unit cell 10 is a circular cross-sectional cell or a square cross-sectional cell.

4. The cell cartridge of claim 1, wherein the case 100 comprises:
a case body 110 having an interior space in which the unit cells 10 are accommodated;
an upper cover 120 assembled to the case body 110 to cover an upper side of the case body 110; and
a side portion 130 assembled to one side of the case body 110 to support the sides of the unit cells 10 accommodated in the case body 110,
wherein the connection plates 101 connecting the electrodes 11 of the respective unit cells 10 to each other are fixedly mounted on an inner side of a bottom plate 117 of the case body 110 and on an inner side of the upper cover 120.

5. The cell cartridge of claim 4, wherein the case 100 further comprises an outer side cover 140, assembled to the outermost side of the side portion 130, and a receiving space, in which circuit components and electrical components such as a PCB and the like are accommodated, the receiving space being formed between the side portion 130 and the outer side cover 140.

6. The cell cartridge of claim 5, wherein each of the connection plates 101 comprises a lead 101a integrally formed on one end thereof and projecting to the outside of the side portion 130 assembled to the case body 110 such that the lead 101a of connection plate 101 is directly connected to a terminal 161 of a PCB 160 when the PCB 160 is assembled to the outside of the side portion 130.

7. The cell cartridge of claim 6, wherein the lead 101 of each connection plate 101 is bent at a right angle toward the outside of the side portion 130 such that the terminal 161 of the PCB 160 is directly connected to a wall of the lead 101a bent at a right angle.

8. The cell cartridge of claim 4, wherein the connection plate 101 mounted on the bottom plate 117 and the connection plate 101 mounted on the upper cover 120 are formed lengthwise and arranged in the case 100 in the transverse direction, each of the connection plates 101 comprises terminals 102a and 102b connected to two rows of cells 10 in the longitudinal direction, and the connection plates 101 on the bottom plate 117 and the connection plates 101 on the upper cover 120 are alternately arranged in the longitudinal direction.

9. The cell cartridge of claim 4, wherein the side portion 130, which forms the side of the case 100, and side portions 111, 113 and 115 and 130 of the case body 110 comprise concave receiving portions 112, 114, 116 and 131, which accommodate a part of the sides of the unit cells 10 and are formed on the inner sides of the side portions 111, 113, 115 and 130 of the case 100, respectively, such that the unit cells 10 accommodated and supported by the receiving portions 112, 114, 116 and 131 are spaced apart from each other by the side portions 111, 113, 115 and 130.

10. The cell cartridge of claim 4, wherein the side portion 130, which forms the side of the case 100, the side portions 111, 113 and 115 and 130 of the case body 110, the bottom plate 117 of the case body 110, and the upper cover 120 comprise a plurality of vent holes 111a, 113a, 115a, 115a, 118, 121, 132 and 141, respectively.

11. The cell cartridge of claim 4, wherein the upper cover 120 is provided with a plurality individual upper covers 120, and the plurality of upper covers 120 cover the upper side of the case body 110 and is then assembled.

12. The cell cartridge of claim 1, wherein the spacing members 150 are formed into a long plate shape, spaced at regular intervals in the case body 110 to be positioned between the cells 10, and each comprises a plurality of concave receiving portions 151, in which a part of the sides of the cells 10 is inserted through the top and bottom of both sides of the spacing members 150, such that the unit cells 10 accommodated in the receiving portions 151 are spaced apart from each other by the spacing members 150.

13. The cell cartridge of claim 12, wherein each of the spacing members 150 comprises a plurality of vent holes 152 for air circulation.

14. The cell cartridge of claim 1, wherein each of the connection plates 101 comprises an elastic terminal plate 102a with a Z-shaped plate spring such that the bottom of the elastic terminal plate 102a is fixed to the connection plate 101 and the top of the elastic terminal plate 102a is elastically connected to the electrode 11 of the cell 10.

15. The cell cartridge of claim 1, wherein the connection plate 101 comprises a plurality of terminals 102 projecting to connect to the electrodes 11 of the cells 10, each of the terminals 102 including a magnet 103 inserted in the middle of the terminal 102 such that the terminal 102 is attached to the electrode 11 of the cell 10.

16. The cell cartridge of claim 1, wherein the connection plate 101 comprises a plurality of terminals 102 projecting to connect to the electrodes 11 of the cells 10, the surface of each of the terminals 102 to be in contact the electrode 11 of the cell 10 has a round embossed pattern.

17. The cell cartridge of claim 1, wherein the connection plate 101 comprises a plurality of terminals 102 projecting to connect to the electrodes 11 of the cells 10, the surface of each of the terminals 102 to be in contact the electrode 11 of the cell 10 has a comb-shaped pattern.

18. The cell cartridge of claim 1, wherein the connection plate 101 comprises a plurality of terminals 102 projecting to connect to the electrodes 11 of the cells 10, each of the terminals 102 comprising a spring 104 disposed in an interior space thereof and a terminal plate 105 mounted at the top end of the terminal 102, where the terminal plate 105 is to be in contact with the electrode 11 of the cell 10, elastically supported by the spring 104, and electrically connected to the terminal 102 of the connection plate 101, such that the terminal plate 105 elastically projects by the spring 104 and thus the projecting middle of the terminal plate 105 is connected to the electrode 11 of the cell 10.

19. The cell cartridge of claim 1, wherein the unit cells 10 are accommodated in upper and lower layers of a double-layered structure in the case 100, and an intermediate connection plate 106 is interposed between the cells 10 in the upper layer and the cells 10 in the lower layer, the intermediate connection plate 106 comprising a plurality of upper and lower terminals 107 projecting from both upper and lower sides thereof and connected to the electrodes 11 of the cells 10.

20. The cell cartridge of claim 1, wherein a plurality of cell cartridges are electrically connected to each other by cables to constitute a system.
